(19) Europäisches Patentamt
European Patent Office
Office européen des brevets

(11) **EP 4 282 918 B1**

(12) **EUROPEAN PATENT SPECIFICATION**

(45) Date of publication and mention
of the grant of the patent:
**18.02.2026 Bulletin 2026/08**

(21) Application number: **22759522.0**

(22) Date of filing: **18.02.2022**

(51) International Patent Classification (IPC):
**C08L 39/00** (2006.01)  **C08L 51/06** (2006.01)
**C08L 77/00** (2006.01)

(52) Cooperative Patent Classification (CPC):
(C-Sets available)
**C08L 77/02; C08F 8/32; C08F 212/08;**
**C08F 212/10; C08L 25/12; C08L 35/06**  (Cont.)

(86) International application number:
**PCT/JP2022/006660**

(87) International publication number:
**WO 2022/181486 (01.09.2022 Gazette 2022/35)**

(54) **ABS RESIN MODIFIER, RESIN COMPOSITION, MOLDED BODY, AND METHOD FOR PRODUCING RESIN COMPOSITION**

ABS-HARZMODIFIKATOR, HARZZUSAMMENSETZUNG, FORMKÖRPER UND VERFAHREN ZUR HERSTELLUNG DER HARZZUSAMMENSETZUNG

MODIFICATEUR DE RÉSINE ABS, COMPOSITION DE RÉSINE, CORPS MOULÉ ET PROCÉDÉ DE PRODUCTION DE COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2021 JP 2021030177**

(43) Date of publication of application:
**29.11.2023 Bulletin 2023/48**

(73) Proprietor: **Denka Company Limited**
**Tokyo 103-8338 (JP)**

(72) Inventors:
• **OTA, Fuyuki**
**Tokyo 103-8338 (JP)**
• **NISHINO, Kohei**
**Tokyo 103-8338 (JP)**

(74) Representative: **Gulde & Partner**
**Patent- und Rechtsanwaltskanzlei mbB**
**Berliner Freiheit 2**
**10785 Berlin (DE)**

(56) References cited:
JP-A- 2008 057 033    JP-A- 2008 246 722
JP-A- 2008 247 983    JP-A- 2008 247 984
JP-A- 2009 166 274    JP-A- 2010 043 204
JP-A- 2010 285 598    JP-A- 2011 080 000
JP-A- 2011 126 950    JP-A- 2020 066 734
JP-A- 2020 066 734    JP-A- H06 248 190
JP-A- H09 194 719    JP-A- H09 194 720
JP-B2- 5 270 888     US-A- 5 218 069
US-A1- 2021 277 232

(52) Cooperative Patent Classification (CPC): (Cont.)

C-Sets
**C08F 8/32, C08F 212/08;**
**C08F 212/08, C08F 222/02;**

**C08F 212/08, C08F 222/40, C08F 220/40,**
**C08F 222/02;**
**C08F 212/10, C08F 220/44;**
**C08L 25/12, C08L 55/02, C08L 33/24;**
**C08L 77/02, C08L 35/06**

**Description**

## TECHNICAL FIELD

The present invention relates to an ABS resin modifier, a resin composition containing the ABS resin modifier, a molded body obtained by molding the resin composition, and a method for producing the resin composition.

## BACKGROUND ART

ABS resin is a thermoplastic resin whose main components are acrylonitrile, butadiene, and styrene. Taking advantage of its excellent mechanical strength, appearance, chemical resistance, moldability, and the like, it is widely used in automobiles, home appliances, OA equipment, housing materials, daily necessities, and the like. It is known that chemical resistance and impact resistance can be enhanced by adding a polyamide resin and a compatibilizer to an ABS resin (JP 2007 217621 A and JP 2014 122254 A). However, when the content of the polyamide resin is small, it is difficult to achieve both chemical resistance and impact resistance, and when the content is large, the dimensional stability after moisture absorption may be poor. Further examples may be found in JP 2020 066734 A, JP 5270888 B2 and JP 2008 247983 A.

## SUMMARY OF INVENTION

### TECHNICAL PROBLEM

An object of the present invention is to provide an ABS resin modifier that improves the impact resistance and chemical resistance of ABS resin.

### SOLUTION TO PROBLEM

A first aspect of the present invention relates to an ABS resin modifier comprising a maleimide-based resin (A) having a maleimide-based monomer unit, a styrene-based monomer unit, and an unsaturated dicarboxylic acid anhydride-based monomer unit, and a polyamide resin (B), wherein:

the ABS resin modifier has a dispersed phase;
the dispersed phase has an average particle size of 100 nm or less;
an amount of the styrene-based monomer unit contained in the maleimide-based resin (A) is 40 to 70% by mass, when entire maleimide-based resin (A) is taken as 100% by mass;
an amount of the maleimide-based monomer unit contained in the maleimide-based resin (A) is 10 to 50% by mass when entire maleimide-based resin (A) is taken as 100% by mass; and
the polyamide resin (B) has a terminal amino group content of 2.6 to 3.3 mgKOH/g. In a preferred embodiment, the maleimide-based resin (A) contains 1 to 10% by mass of the unsaturated dicarboxylic anhydride-based monomer unit with respect to 100% by mass of the maleimide-based resin (A).

More preferably, when a test piece is prepared by conditioning for 16 hours in a constant temperature bath maintained at 23 °C and 50% humidity, a nominal tensile strain at break of the test piece measured at a tensile speed of 50 mm/min in accordance with JIS K 7161 is 10% or more.

Another aspect of the present invention relates to a resin composition comprising the ABS resin modifier as described above and at least one resin (C) selected from ABS resin, SAN resin, ASA resin and AES resin.

In a preferred embodiment, the polyamide resin (B) contained in the resin composition is less than 20% by mass when entire resin composition is taken as 100% by mass.

More preferred, when a test piece with a notch is prepared by conditioning for 16 hours in a constant temperature bath maintained at 23°C and 50% humidity, a Charpy impact strength of the test piece with the notch measured using edgewise as an impact direction in accordance with JIS K7111-1 is 12 KJ/m$^2$ or more.

Another aspect of the present invention relates to a method for producing a resin composition, comprising the step of melt-kneading raw materials containing the ABS resin modifier described above and at least one resin (C) selected from ABS resin, SAN resin, ASA resin, and AES resin in an extruder.

Another aspect of the present invention relates to a molded body obtained by molding the resin composition described above.

## EFFECTS OF THE INVENTION

By adding the ABS resin modifier of the present invention to at least one resin selected from ABS resin, SAN resin, ASA resin and AES resin, a resin composition having excellent chemical resistance and impact resistance can be obtained.

## DESCRIPTION OF EMBODIMENTS

<Explanation of Terms>

In the present specification, the phrase "A to B" means A or more and B or less.

Hereinafter, the embodiments of the present invention will be described in detail.

The ABS resin modifier of this embodiment contains a maleimide-based resin (A) and a polyamide resin (B). The ABS resin modifier of the present embodiment is preferably obtained by melt-kneading raw materials containing the maleimide-based resin (A) and the polyamide resin (B).

The maleimide-based resin (A) has a maleimide-based monomer unit, a styrene-based monomer unit, and an unsaturated dicarboxylic acid anhydride-based monomer unit. The maleimide-based resin (A) may have monomer units other than a maleimide-based monomer unit, a styrene-based monomer unit, and a unsaturated dicarboxylic acid anhydride-based monomer unit. For example, it may further have a vinyl cyanide monomer unit.

Examples of the maleimide-based monomer unit include N-alkyl maleimides such as N-methyl maleimide, N-butyl maleimide, and N-cyclohexyl maleimide; N-phenyl maleimide; N-chlorophenyl maleimide; N-methylphenyl maleimide; N-methoxyphenyl maleimide; and N-tribromophenyl maleimide. Among these, N-phenyl maleimide is preferable. These maleimide-based monomer units may be used alone, or two or more of these may be used in combination. The maleimide-based monomer unit can be obtained by using a raw material including a maleimide-based monomer. Otherwise, a raw material including unsaturated dicarboxylic monomer unit can be imidized using ammonia or primary amine.

Examples of the styrene-based monomer unit include styrene, o-methyl styrene, m-methyl styrene, p-methyl styrene, 2,4-dimethyl styrene, ethyl styrene, p-tert-butyl styrene, $\alpha$-methyl styrene, and $\alpha$-methyl-p-methyl styrene. Among these, styrene is preferable. These styrene-based monomer units may be used alone, or two or more of these may be used in combination.

Examples of the unsaturated dicarboxylic anhydride-based monomer unit include maleic anhydride, itaconic anhydride, citraconic anhydride, and aconitic anhydride. Among these, maleic anhydride is preferable. These unsaturated dicarboxylic anhydride-based monomer units may be used alone, or two or more of these may be used in combination.

Examples of the vinyl cyanide monomer unit include acrylonitrile, methacrylonitrile, ethacrylonitrile, fumaronitrile, and the like. Among these, acrylonitrile is preferred. The vinyl cyanide monomer unit may be used alone or in combination of two or more.

The weight average molecular weight (Mw) of the maleimide-based resin (A) is preferably 80,000 to 180,000, more preferably 130,000 to 160,000. When the weight average molecular weight (Mw) is too small, the impact strength of the resin composition obtained using the ABS resin modifier may decrease. When it is too large, the fluidity of the resin composition obtained using the ABS resin modifier may be lowered, and the moldability may be deteriorated.

To control the weight average molecular weight (Mw) of the maleimide-based resin (A), a polymerization temperature, a polymerization time, and an amount of polymerization initiator added can be adjusted. In addition, a solvent concentration and an amount of chain transfer agent added can also be adjusted. The weight average molecular weight of the maleimide-based resin (A) is a value of polystyrene equivalent measured by gel permeation chromatography (GPC), which is measured under the following condition.

Name of Instrument: SYSTEM-21 Shodex (manufactured by Showa Denko K.K.)
Column: PL gel MIXED-B, 3 columns connected in series
Temperature: 40°C
Detection: differential refractive index
Eluent: tetrahydrofuran
Concentration: 2 % by mass
Calibration Curve: prepared using standard polystyrene (PS) (manufactured by Polymer Laboratories Ltd)

The amount of the styrene-based monomer unit contained in the maleimide-based resin (A) is 40 to 70% by mass, preferably 40 to 60% by mass, when the entire maleimide-based resin (A) is taken as 100% by mass. The amount of the styrene-based monomer unit contained in the maleimide-based resin (A) is, for example, 40, 45, 50, 55, 60, 65, 70% by mass, and may be in the range between the two values exemplified herein. When the content of the styrene-based monomer unit is too low, the compatibility with the ABS resin may deteriorate, and the effect as an ABS resin modifier may not be sufficiently exhibited. When it is too high, the dispersed phase in the ABS resin modifier may become large.

The amount of the unsaturated dicarboxylic anhydride-based monomer unit contained in the maleimide-based resin (A) is preferably 1 to 10% by mass, more preferably 1 to 7% by mass, when the entire maleimide-based resin (A) is taken as 100% by mass. The amount of the unsaturated dicarboxylic anhydride-based monomer unit contained in the maleimide-based resin (A) is, for example, 1, 2, 3, 4, 5, 6, 7, 8, 9, 10% by mass, and may be in the range between the two values exemplified herein. When the amount of unsaturated dicarboxylic anhydride-based monomer units is too small, the impact strength of the resin composition may decrease. When it is too large, the fluidity of the resin composition may be lowered and the moldability may be deteriorated. The amount of unsaturated dicarboxylic anhydride-based monomer unit is a value measured by a titration method. Further, as described later, by appropriately controlling the amount of the unsaturated dicarboxylic acid anhydride-based monomer unit contained in the maleimide-based resin (A), it becomes easier to control the average particle size of the dispersed phase.

The amount of the maleimide-based monomer unit contained in the maleimide-based resin (A) is 10 to 50% by mass when the entire maleimide-based resin (A) is taken as 100% by mass. When the content of the maleimide-based monomer unit is less than 10% by mass, the compatibility with the ABS resin may deteriorate, and the effect as an ABS resin modifier may not be sufficiently exhibited. The content of maleimide-based monomer units is preferably 30 to 50% by mass. The content of the maleimide-based monomer unit is, for example, 10, 20, 30, 40, 50% by mass, and may be in the range between the two values exemplified herein.

The total amount of the styrene-based monomer unit, the unsaturated dicarboxylic acid anhydride-based monomer unit, and the maleimide-based monomer unit contained in the maleimide-based resin (A) is preferably 90% by mass or more when the entire maleimide-based resin (A) is taken as 100% by mass.

The maleimide-based resin (A) may also consist of only the styrene-based monomer unit, the unsaturated dicarboxylic acid anhydride-based monomer unit, the maleimide-based monomer unit, and the vinyl cyanide monomer unit. The maleimide-based resin (A) may also consist of only the styrene-based monomer unit, the unsaturated dicarboxylic acid anhydride-based monomer unit, and the maleimide-based monomer unit.

The midpoint glass transition temperature (Tmg) of the maleimide-based resin (A) is preferably 170 to 210°C, more preferably 175 to 205°C. The midpoint glass transition temperature (Tmg) of the maleimide-based resin (A) is a value measured by DSC in accordance with JIS K-7121 under the measurement conditions described below.

Device name: Robot DSC6200 manufactured by Seiko Instruments Inc.
Heating rate: 10°C/min

As a method for producing the maleimide-based resin (A), a known method can be adopted. For example, there is a method in which a monomer mixture including a styrene-based monomer, a maleimide-based monomer, an unsaturated dicarboxylic anhydride-based monomer, and other copolymerizable monomers are copolymerized. There is also a method in which a monomer mixture including the styrene-based monomer, the unsaturated dicarboxylic anhydride-based monomer, and other copolymerizable monomers are copolymerized, followed by imidization to allow a part of the unsaturated dicarboxylic anhydride-based monomer unit to react with ammonia or primary amine to convert the part of the unsaturated dicarboxylic anhydride-based monomer unit into the maleimide-based monomer unit (hereinafter referred to as "post-imidizing method").

Examples of the polymerization method of the maleimide-based resin (A) include solution polymerization and bulk polymerization. Solution polymerization is preferable from the viewpoint that the maleimide-based resin (A) with a more uniform copolymerization composition can be obtained by polymerizing while dividedly adding the monomer to be copolymerized or the like. The solvent for solution polymerization is preferably non-polymerizable from the viewpoint that the formation of byproduct and the adverse effect can be suppressed. Examples of the solvent include ketones such as acetone, methyl ethyl ketone, methyl isobutyl ketone, and acetophenone; ethers such as tetrahydrofuran, and 1,4-dioxiane; aromatic hydrocarbons such as benzene, toluene, xylene, and chlorobenzene; N,N-dimethylformamide; dimethyl sulfoxide; and N-methyl-2-pyrrolidone. In terms of easily removing the solvent during devolatilization and recovery of the maleimide-based resin, methyl ethyl ketone and methyl isobutyl ketone are preferable. As a polymerization step, a continuous polymerization step, a batch process (batch), and a semi-batch process are all applicable. The polymerization method is not particularly limited. Here, radical polymerization is preferable since high productivity can be achieved with a simple process.

In the solution polymerization or the bulk polymerization, a polymerization initiator and a chain transfer agent can be used, and the polymerization temperature is preferably in the range of 80 to 150°C. Examples of the polymerization initiator include azo compounds such as azobisisobutyronitrile, azobiscyclohexanecarbonitrile, azobismethylpropionitrile, and azobismethylbutyronitrile; and peroxides such as benzoyl peroxide, t-butyl peroxybenzoate, 1,1-di-(t-butyl peroxy)cyclohexane, t-butyl peroxy isopropyl monocarbonate, t-butyl peroxy-2-ethylhexanoate, di-t-butyl peroxide, dicumylperoxide, and ethyl-3,3-di-(t-butylperoxy)butyrate. These polymerization initiators may be used alone, or two or more of these may be used in combination. From the viewpoint of the polymerization reaction rate and controlling of the rate of conversion, azo compounds and organic peroxides having a 10 hour half-life of 70 to 120°C are preferable. The amount of the polymerization initiator used is not particularly limited. Here, the amount is preferably 0.1 to 1.5 parts by mass, more preferably 0.1 to 1.0 parts by mass, with respect to 100 parts by mass of the total monomer unit. When the amount of the polymerization initiator used is 0.1 parts by mass or more, it is preferable since the sufficient polymerization reaction rate can be achieved. When the amount of the polymerization initiator used is less than 1.5 parts by mass, the polymerization reaction rate can be suppressed, thereby allowing easy control of the reaction, resulting in obtaining the target molecular weight easily. Examples of the chain transfer agent include n-octyl mercaptan, n-dodecyl mercaptan, t-dodecyl mercaptan, α-methyl styrene dimer, ethyl thioglycolate, limonene, and terpinolene. The amount of the chain transfer agent used is not particularly limited, so long as it is in the range which allows to obtain the target molecular weight. Here, the amount of the chain transfer agent used is preferably 0.1 to 0.8 parts by mass, more preferably 0.15 to 0.5 parts by mass, with respect to 100 parts by mass of the total monomer unit. When the amount of the chain transfer agent used is 0.1 to 0.8 parts by mass, the target molecular weight can be obtained easily.

As a method for introducing the maleimide-based monomer unit of the maleimide-based resin (A), a method in which the maleimide-based monomer is copolymerized and a post-imidizing method can be mentioned. The post-imidizing method is preferable since the amount of the residual maleimide-based monomer in the maleimide-based resin (A) is less. The post-imidizing method is a method in which a monomer mixture including the styrene-based monomer, the unsaturated dicarboxylic anhydride-based monomer, and other copolymerizable monomers is copolymerized, followed by imidization to allow a part of the unsaturated dicarboxylic anhydride-based monomer unit to react with ammonia or primary amine to convert the part of the unsaturated dicarboxylic anhydride-based monomer unit into the maleimide-based monomer unit. Examples of the primary amine used in the post-imidizing method include alkyl amines such as methylamine, ethylamine, n-propylamine, iso-propylamine, n-butylamine, n-pentylamine, n-hexylamine, n-octylamine, cyclohexylamine, and decylamine; chloro- or bromo-substituted alkyl amines; and aromatic amines such as aniline, toluidine, naphthylamine. Among these, aniline is preferable. These primary amines can be used alone, or two or more of these may be used in combination. In the post-imidizing, a catalyst can be used to enhance the dehydration-ring-closing reaction during the reaction between the primary amine and the unsaturated dicarboxylic anhydride group. Examples of the catalyst include tertiary amines such as trimethylamine, triethylamine, tripropylamine, tributylamine, N,N-dimethylaniline, and N,N-diethylaniline. The temperature of the post-imidizing is preferably 100 to 250°C, more preferably 120 to 200°C. When the temperature of the imidizing reaction is 100°C or higher, the reaction rate is sufficiently high. Therefore, it is preferable in view of productivity. When the temperature of the imidizing reaction is 250°C or lower, it is preferable since deterioration of the physical property due to thermal degradation of the maleimide-based resin (A) can be suppressed.

As a method for removing volatile component (devolatilization method) such as the solvent used in the solution polymerization and the unreacted monomer from the solution after the solution polymerization or from the solution after the post-imidizing of the maleimide-based resin (A), a known method can be adopted. For example, a vacuum devolatilization tank equipped with a heater and a devolatilization extruder equipped with a vent can be used. The molten maleimide-based resin (A) after devolatilization is transferred to the pelletizing step. The molten copolymer is extruded into strands from a porous die, and processed into pellets by a cold cut method, an air-cooled hot cutting method or an underwater hot cutting method.

The amount of the maleimide-based monomer remaining in the maleimide-based resin (A) is preferably 300 ppm or less, more preferably 250 ppm or less. When the amount of the remaining maleimide-based monomer is within the above range, the hue of the maleimide-based resin (A) is excellent. The amount of the remaining maleimide-based monomer can be adjusted by polymerization conditions and devolatilization conditions, and is a value quantified using a reprecipitation method.

The polyamide resin (B) is a resin having an amide bond in the main chain, and examples thereof include nylon-6, nylon-6,6, nylon-4,6, nylon-6,7, nylon-6,10, nylon-11 and nylon-12. Among these, nylon-11 is preferred. The polyamide resin (B) may be used alone, or two or more of these may be used in combination.

The molecular weight of the polyamide resin (B) is not particularly limited, but from the viewpoint of fluidity, it preferably has a melt viscosity of 50 to 200 Pa·s at a shear rate of 100 sec-1 at 270°C, more preferably 75 to 175 Pa·s, and even more preferably 100 to 125 Pa·s. The polyamide resin (B) has a terminal amino group content of 2.6 to 3.3 mgKOH/g, and for example, 2.6, 2.7, 2.8, 2.9, 3.0, 3.1, 3.2, 3.3 mgKOH/g, and may be in the range between the two values exemplified herein. As will be described later, the average particle size of the dispersed phase can be easily controlled by appropriately controlling the type and amount of compounding including the amount of terminal amino groups in the polyamide resin (B), production conditions, and the like.

When the entire ABS resin modifier is taken as 100% by mass, the content of the maleimide-based resin (A) in the ABS resin modifier is preferably 10 to 50% by mass, more preferably 15 to 40% by mass, for example, 10, 15, 20, 30, 40, 50% by mass, and may be within a range between any two of the numerical values exemplified here. When the entire ABS resin modifier is taken as 100% by mass, the content of the polyamide resin (B) in the ABS resin modifier is preferably 50 to 90% by mass, more preferably 60 to 80% by mass, for example, 50, 60, 70, 80, 90% by mass, and may be within a range between any two of the numerical values exemplified here. When the entire ABS resin modifier is taken as 100% by mass, the total content of the maleimide-based resin (A) and the polyamide resin (B) in the ABS resin modifier can be 90% by mass or more, preferably 95% by mass or more, and more preferably 98% by mass or more. The ABS resin modifier can also consist of only the maleimide-based resin (A) and the polyamide resin (B). When the content of the maleimide-based resin (A) is too small, the compatibility with the resin (C) may be lowered, and if when it is too large, the fluidity when blended with the resin (C) may be reduced and the moldability may be deteriorated.

The ABS resin modifier according to one embodiment of the present invention has a dispersed phase. The ABS resin modifier preferably has a form of a sea-island dispersed structure of the maleimide-based resin (A) and the polyamide resin (B), the dispersed phase (islands) containing the maleimide-based resin (A), and the matrix phase (sea) containing the polyamide resin (B). The dispersed phase (islands) preferably consists essentially of the maleimide-based resin (A), and the matrix phase (sea) preferably consists essentially of the polyamide resin (B). The average particle size of the dispersed phase is 100 nm or less, preferably 80 nm or less. Also, the average particle size of the dispersed phase can be 10 nm or more. The average particle size of the dispersed phase is, for example, 10, 20, 30, 40, 50, 60, 70, 80, 90, 100 nm and may be in the range between the two values exemplified herein. When the average particle size of the dispersed phase is larger than 100 nm, the impact resistance and chemical resistance of the resin composition may be reduced. The average particle size of the dispersed phase is obtained by observing the ABS resin modifier with a transmission electron microscope (TEM), calculating the diameter (equivalent circle diameter) from the area of each dispersed phase, and calculating the number average value of the diameters.

The average particle size of the dispersed phase can be easily controlled by adjusting the amount of the unsaturated carboxylic acid anhydride-based monomer unit contained in the maleimide-based resin (A) and the amount of terminal amino group in the polyamide resin (B). That is, in the ABS resin modifier according to one embodiment of the present invention, it is considered that the more the unsaturated dicarboxylic acid anhydride-based monomer unit contained in the maleimide-based resin (A) reacts with the terminal amino group contained in the polyamide resin (B), the smaller the average particle size of the dispersed phase. Further, the reaction rate is considered to vary depending on the mobility and viscosity of the polymer chains of the maleimide-based resin (A) and the polyamide resin (B), and the kneading conditions of the maleimide-based resin (A) and the polyamide resin (B). The ABS resin modifier according to one embodiment of the present invention can control the average particle size of the dispersed phase within an appropriate numerical range by adjusting the content of the unsaturated dicarboxylic acid anhydride-based monomer unit contained in the maleimide-based resin (A), the amount of terminal amino group contained in the polyamide resin (B), the polymer properties related to reactivity, and the conditions for kneading the maleimide-based resin (A) and the polyamide resin (B). Moreover, since such the ABS resin modifier has a high degree of dispersibility, it is presumed that when added to an ABS resin or the like, a resin composition having excellent chemical resistance and impact resistance can be obtained.

The ABS resin modifier according to one embodiment of the present invention has a nominal tensile strain at break of preferably 10% or more, preferably 30% or more, preferably 50% or more, and more preferably 70% or more. Although the upper limit is not particularly limited, it can be set to 200%, for example. Here, the nominal tensile strain at break can be measured at a tensile speed of 50 mm/min in accordance with JIS K 7161, and, a test piece prepared by conditioning for 16 hours in a constant temperature bath maintained at 23 °C and 50% humidity can be used.

The ABS resin modifier according to one embodiment of the present invention preferably has a Charpy impact strength of 4 KJ/$m^2$ or more, preferably 5 KJ/$m^2$ or more, preferably 6 KJ/$m^2$, and more preferably 7 KJ/$m^2$. Although the upper limit is not particularly limited, it can be, for example, 20 KJ/$m^2$. Here, the Charpy impact strength can be measured using edgewise as an impact direction in accordance with JIS K7111-1, using a test piece with a notch. The test piece prepared by conditioning for 16 hours in a constant temperature bath maintained at 23°C and 50% humidity can be used. For example, a digital impact tester manufactured by Toyo Seiki Seisaku-sho, Ltd. can be used as the measuring machine.

A known method can be adopted as a method of melt-kneading the maleimide-based resin (A) and the polyamide resin (B), and examples thereof include melt-kneading using an extruder. A known extruder can be used, and examples thereof include a twin-screw extruder, a single-screw extruder, a multi-screw extruder, and a continuous kneader with a twin-screw rotor. An intermeshing co-rotating twin-screw extruder is widely used and can be preferably used. Moreover, these extruders can be used in combination. Although there are no particular restrictions on the extruder and extrusion temperature, it is preferable to use a twin-screw extruder and perform melt-kneading at 260°C to 320°C from the viewpoint of making the particle size of the dispersed phase of the ABS resin modifier 100 nm or less. Depending on other production conditions, the screw rotation speed can be, for example, 150 to 350 rpm, and the throughput can be 15 to 35 kg/hr.

The resin composition according to one embodiment of the present invention comprises the ABS resin modifier described above and at least one resin (C) selected from ABS resin, SAN resin, ASA resin, and AES resin. The resin composition according to one embodiment of the present invention is a resin composition obtained by melt-kneading raw materials containing the ABS resin modifier described above and at least one resin (C) selected from ABS resin, SAN resin, ASA resin, and AES resin.

The ABS resin modifier has the effect of improving the impact resistance and chemical resistance of the resin (C). The resin (C) preferably contains at least one of ABS resin and SAN resin, more preferably ABS resin and SAN resin, and may consist of only ABS resin and SAN resin. As the resin (C), two types can be used, and, for example, powdery ABS resin obtained by emulsion polymerization and pelletized SAN resin obtained by continuous bulk polymerization may be used. A powdered ABS resin obtained by emulsion polymerization and a pelletized SAN resin obtained by continuous bulk polymerization may be previously melt-blended using an extruder or the like to obtain a pelletized ABS resin and the resulting pelletized ABS resin may be used.

The content of the ABS resin modifier in the resin composition is preferably 5 to 20% by mass, more preferably 10 to 15% by mass, when the entire resin composition is taken as 100% by mass. The content of the ABS resin modifier in the resin composition may be, for example, 5, 6, 7, 8, 9, 10, 11, 12, 13, 14, 15, 16, 17, 18, 19, 20% by mass, and may be in the range between the two values exemplified herein.

In the resin composition according to one embodiment of the present invention, the polyamide resin contained in the resin composition is preferably less than 20% by mass, more preferably 15% by mass or less, and preferably less than 10% by mass, when the entire resin composition is taken as 100% by mass. The polyamide resin contained in the resin composition is, for example, 5, 6, 7, 8, 9, 10, 11, 12, 13, 14, 15, 16, 17, 18, 19, 20% by mass, and may be in the range between the two values exemplified herein. When the ABS resin modifier according to one embodiment of the present invention is used, the resin composition having sufficient chemical resistance and impact resistance can be obtained even if the content of the polyamide resin in the resin composition is smaller than that of the conventional resin composition, and a decrease in dimensional stability after moisture absorption that can occur when the content of the polyamide resin is high can be prevented.

ABS resin, ASA resin, and AES resin are graft copolymers obtained by graft-copolymerizing a rubber-like polymer with at least a styrene-based monomer and an acrylonitrile-based monomer. For example, when using butadiene-based rubber such as polybutadiene and styrene-butadiene copolymer as the rubber-like polymer, it is ABS resin, when using acrylate-based rubber made of butyl acrylate, ethyl acrylate, and the like, it is ASA resin, and when using ethylene-based rubber such as ethylene-$\alpha$-olefin copolymer, it is AES resin. At the time of graft copolymerization, two or more of these rubber-like polymers may be used in combination.

As the production method of the graft copolymer such as the ABS resin, a known method can be adopted. For example, a production method performing emulsion polymerization or continuous bulk polymerization can be mentioned. The method which performs the emulsion polymerization is preferable since the content of the rubber-like polymer in the final resin composition can be adjusted easily.

As the production method of the graft copolymer which performs emulsion polymerization, a method in which the styrene-based monomer and the acrylonitrile-based monomer are emulsion-graft polymerized to a latex of a rubber-like polymer can be mentioned (hereinafter referred to as "emulsion-graft polymerization method"). A latex of a graft copolymer can be obtained by the emulsion-graft polymerization method.

In the emulsion-graft polymerization method, water, an emulsifier, a polymerization initiator, and a chain transfer agent are used, and the polymerization temperature is preferably in the range of 30 to 90°C. Examples of the emulsifier include anionic surfactant, nonionic surfactant, and amphoteric surfactant. Examples of the polymerization initiator include organic peroxides such as cumene hydroperoxide, diisopropylbenzene peroxide, t-butyl peroxyacetate, t-hexyl peroxybenzoate, t-butyl peroxybenzoate; persulfates such as potassium persulfate and ammonium persulfate; azo-based compounds such as azobisbutyronitrile; reducing agents such as iron ion; secondary reducing agents such as sodium formaldehyde sulfoxylate; and chelating agents such as ethylenediaminetetraacetic acid disodium. Examples of the chain transfer agent include n-octyl mercaptan, n-dodecyl mercaptan, t-dodecyl mercaptan, $\alpha$-methyl styrene dimer, ethyl thioglycolate, limonene, and terpinolene.

The latex of the graft copolymer can be solidified by a known method to collect the graft copolymer. For example, a solidifying agent is added to the latex of the graft copolymer to allow solidification, and then the graft copolymer is washed and dehydrated in a dehydrator followed by a drying step. Accordingly, a powdered graft copolymer is obtained.

In terms of impact resistance, the content of the rubber-like polymer in the graft copolymer obtained by the emulsion-graft polymerization method is preferably 40 to 70 % by mass, more preferably 45 to 65 % by mass. The content of the rubber-like polymer can be adjusted by, for example, the ratio of the styrene-based monomer and the acrylonitrile-based monomer used with respect to the rubber-like polymer when performing the emulsion-graft polymerization.

In terms of impact resistance and chemical resistance, the content of the constituting units other than the rubber-like polymer of the graft copolymer obtained by the emulsion-graft polymerization method are preferably 65 to 85 % by mass of the styrene-based monomer unit and 15 to 35 % by mass of the acrylonitrile-based monomer unit.

The gel component of the graft copolymer is preferably in the form of particles. The gel component is a particle of a rubber-like polymer obtained by graft copolymerizing a styrene-based monomer and an acrylonitrile-based monomer. The gel component is the component which is insoluble in an organic solvent such as methyl ethyl ketone (MEK) and toluene and can be separated by centrifugal separation. In some cases, an occlusion structure is formed, in which the styrene-acrylonitrile-based copolymer is encapsulated in a particle shape inside the rubber-like polymer particles. When the graft copolymer and the styrene-acrylonitrile-based copolymer are melt-blended, the gel component exists as a dispersed phase in the form of particles in the continuous phase of the styrene-acrylonitrile-based copolymer.

The gel content is obtained by dissolving the graft copolymer having a mass of W in methylethylene ketone, centrifuging at 20,000 rpm using a centrifuge to precipitate the insoluble content, removing the supernatant liquid by decantation to obtain the insoluble content, and calculating using the following formula.

$$\text{Gel content (\% by mass)} = (S / W) \times 100$$

S: Mass of the dried insoluble content after vacuum drying

Similarly, by dissolving a polymer blend, which is obtained by melt blending a graft copolymer and a styrene-acrylonitrile copolymer in methyl ethyl ketone, centrifuging, and calculating, the gel content may be obtained.

In terms of the impact resistance and appearance of the molded body, the number average particle diameter of the gel component of the graft copolymer is preferably in the range of 0.10 to 1.0 μm, more preferably 0.15 to 0.50 μm. The number average particle diameter is a value calculated as follows. Ultra-thin sections are cut out from the pellets of the polymer blend obtained by melt-blending the graft copolymer and the styrene-acrylonitrile-based copolymer, and the cut-out sections were observed with a transmission electron microscope (TEM). An image analysis of particles dispersed in the continuous phase was performed and calculation was conducted to obtain the number average particle diameter. The number average particle diameter can be adjusted by the particle diameter of the latex of the rubber-like polymer used in the emulsion-graft polymerization for example. The particle diameter of the latex of the rubber-like polymer can be adjusted by the addition method of the emulsifier and the amount of water used in the emulsion polymerization. The conditions to achieve the preferable range would result in a long polymerization time and thus the productivity becomes low. Therefore, a method in which a rubber-like polymer having a particle diameter of approximately 0.1 μm is polymerized in a short period of time and then the rubber particles are enlarged by a chemical aggregation method or a physical aggregation method can be mentioned.

The graft ratio of the graft copolymer is preferably 10 to 100 % by mass, more preferably 20 to 70 % by mass in terms of impact resistance. The graft ratio is a value calculated from the equation of "graft ratio (% by mass) = [(G - RC)/RC] × 100" based on the amount of gel component (G) and the content of the rubber-like polymer (RC). The graft ratio represents the content of the graft-bonded styrene-acrylonitrile-based copolymer and the styrene-acrylonitrile-based copolymer encapsuled in the particle per unit mass of the rubber-like polymer in the particles of the rubber-like polymer. The graft ratio represents the amount of the styrene-acrylonitrile-based copolymer the particles of the rubber-like polymer contain per unit mass of the rubber-like polymer, the styrene-acrylonitrile-based copolymer either encapsulated by the particles or graft-bonded. The graft ratio can be adjusted by, for example, the ratio of the monomer and the rubber-like polymer, the kind and amount of the initiator, the amount of the chain transfer agent, the amount of emulsifier, the polymerization temperature, the feeding method (batch/multistage/continuous), the addition rate of monomer and the like during the emulsion-graft polymerization.

The degree of toluene swelling of the graft copolymer is preferably 5 to 20 times from the viewpoint of the impact resistance and appearance of the molded body. The degree of toluene swelling represents the degree of crosslinking of the particles of the rubber-like polymer and is calculated as follows. The graft copolymer is dissolved in toluene, insoluble component is separated by centrifugation or filtration, and the value of the degree of toluene swelling is calculated from the ratio of the mass in a state of being swollen with toluene and the mass in a dry state where toluene is removed by vacuum drying. The degree of toluene swelling is, for example, influenced by the degree of crosslinking of the rubber-like polymer used in the emulsion graft polymerization, and can be adjusted by the initiator, the emulsifier, the polymerization temperature, and the addition of the polyfunctional monomer such as divinylbenzene during the emulsion polymerization of the rubber-like polymer.

The SAN resin is a copolymer including the styrene-based monomer unit and the acrylonitrile-based monomer unit, such as the styrene-acrylonitrile-based copolymer.

As other copolymerizable monomers of the SAN resin, (meth)acrylic acid ester-based monomers such as methyl methacrylate; acrylic ester-based monomers such as butyl acrylate and ethyl acrylate; (meth)acrylic acid-based monomers such as methacrylic acid; acrylic acid-based monomers such as acrylic acid; and N-substituted maleimide-based monomers such as N-phenyl maleimide can be used.

The constituting units of the SAN resin are preferably 60 to 90 % by mass of the styrene-based monomer unit and 10 to 40 % by mass of the vinyl cyanide monomer unit, more preferably 65 to 80 % by mass of the styrene-based monomer unit and 20 to 35 % by mass of the vinyl cyanide monomer unit. When the constituting units are within the above ranges, the balance between impact strength and flowability of the obtained resin composition is superior. The content of the styrene-based monomer unit and the vinyl cyanide monomer unit are values measured by 13C-NMR.

As a production method of the SAN resin, a known method can be adopted. For example, the SAN resin can be produced by bulk polymerization, solution polymerization, suspension polymerization, emulsion polymerization and the like. The reaction apparatus can be operated by any of the continuous operation, batch operation, and semi-batch operation. In terms of quality and productivity, bulk polymerization and solution polymerization are preferable, and continuous operation is preferable. Examples of the solvents which can be used in bulk polymerization or solution polymerization include alkylbenzenes such as benzene, toluene, ethylbenzene and xylene; ketones such as acetone and methyl ethyl ketone; and aliphatic hydrocarbons such as hexane and cyclohexane.

In the bulk polymerization and solution polymerization of the SAN resin, a polymerization initiator and a chain transfer agent can be used, and the polymerization temperature is preferably in the range of 120 to 170°C. Examples of the polymerization initiator include peroxy ketals such as 1,1-di (t-butylperoxy) cyclohexane, 2,2-di (t-butylperoxy) butane, 2,2-di (4,4-di-t-butylperoxycyclohexyl) propane, and 1,1-di (t-amylperoxy) cyclohexane; hydroperoxides such as cumene hydroperoxide and t-butyl hydroperoxide; alkyl peroxides such as t-butyl peroxyacetate and t-amyl peroxy isononanoate; dialkyl peroxides such as t-butyl cumyl peroxide, di-t-butyl peroxide, dicumyl peroxide, and di-t-hexyl peroxide; peroxyesters such as t-butyl peroxyacetate, t-butyl peroxybenzoate and t-butylperoxy isopropyl monocarbonate; peroxy carbonates such as t-butyl peroxy isopropyl carbonate and polyether tetrakis (t-butyl peroxy carbonate); N,N'-azobis (cyclohexane-1-carbonitrile); N,N'-azobis (2-methylbutyronitrile); N,N'-azobis (2,4-dimethylvaleronitrile); and N,N'-azobis [2-(hydroxymethyl) propionitrile]. These polymerization initiators can be used alone, or two or more of these can be used in combination. Examples of the chain transfer agent include n-octyl mercaptan, n-dodecyl mercaptan, t-dodecyl mercaptan, α-methyl styrene dimer, ethyl thioglycolate, limonene, and terpinolene.

As a method for removing volatile component such as the unreacted monomer and solvent used in the solution polymerization from the solution after polymerization of the SAN resin, a known method can be adopted. For example, a vacuum devolatilization tank equipped with a pre-heater and a devolatilization extruder equipped with a vent can be used. The molten SAN resin after devolatilization is transferred to the pelletizing step. The molten copolymer is extruded into strands from a porous die, and processed into pellets by a cold cut method, an air-cooled hot cutting method or an underwater hot cutting method.

The weight average molecular weight of the SAN resin is preferably 50,000 to 250,000, more preferably 70,000 to 200,000, from the viewpoint of impact resistance and moldability of the resin composition. The weight average molecular weight of the SAN resin is a polystyrene-equivalent value measured in a THF solvent using gel permeation chromatography (GPC), and is a value measured in the same manner as for the maleimide-based resin (A). The weight average molecular weight can be adjusted by the type and amount of chain transfer agent during polymerization, solvent concentration, polymerization temperature, and type and amount of polymerization initiator.

A method for producing the resin composition according to one embodiment of the present invention includes a step of melt-kneading raw materials containing the ABS resin modifier described above and at least one resin (C) selected from ABS resins, SAN resins, ASA resins, and AES resins.

As a method for melt-kneading the ABS resin modifier and at least one type of resin (C) selected from ABS resin, SAN resin, ASA resin, and AES resin, a known method can be adopted, for example, melt-kneading using an extruder. A known extruder can be used, and examples thereof include a twin-screw extruder, a single-screw extruder, a multi-screw extruder, and a continuous kneader with a twin-screw rotor. An intermeshing co-rotating twin-screw extruder is widely used and can be preferably used. Moreover, these extruders can be used in combination. Although there are no particular restrictions on the extruder and the extrusion temperature, it is preferable to use a twin-screw extruder and perform melt-kneading at 260°C or higher from the viewpoint of efficiently dispersing the resin composition. Depending on other production conditions, the screw rotation speed can be, for example, 150 to 350 rpm, and the throughput can be 15 to 35 kg/hr.

The resin composition may contain, if necessary, additives, for examples, heat stabilizers such as hindered phenol-based compounds, lactone-based compounds, phosphorous-based compounds, sulfur-based compounds, light stabilizers such as hindered amine-based compounds and benzotriazole-based compounds, lubricants and plasticizers, colorants, impact modifiers, hardness modifiers, antistatic agents, flame retardants, mineral oil may be added. These may be used alone, or two or more of these may be used in combination. These additives can be added during the production of the maleimide-based resin (A), the polyamide resin (B), or the resin (C), or during melt blending of the ABS resin modifier or the resin composition. These additives can be, for example, 5 % by mass or less, 3 % by mass, or 1 % by mass when the entire resin composition is taken as 100% by mass. The resin composition can also be free of these additives.

The resin composition according to one embodiment of the present invention preferably has a melt mass flow rate of 5 to 15 g/10 minutes. The melt mass flow rate may be, for example, 5, 6, 7, 8, 9, 10, 11, 12, 13, 14, 15 g/10 minutes, and may be in the range between the two values exemplified herein. Here, the melt mass flow rate can be measured at 240°C and a load of 98N based on JIS K7210.

The resin composition according to one embodiment of the present invention preferably has a Vicat softening temperature of 100 to 105°C. The Vicat softening temperature can be, for example, 100, 101, 102, 103, 104, and 105°C and may be in the range between the two values exemplified herein. Here, the Vicat softening temperature can be measured using the 50 method (load 50N, temperature increase rate 50°C/hour) in accordance with JIS K7206 using a 10 mm x 10 mm, 4 mm thick test piece, which is prepared by conditioning for 16 hours in a constant temperature bath maintained at 23 °C and 50% humidity.

The resin composition according to one embodiment of the present invention preferably has a Charpy impact strength of 12 KJ/m$^2$ or more. Although the upper limit is not particularly limited, it can be, for example, 30 KJ/m$^2$. The Charpy impact strength of the resin composition can be, for example, 12, 15, 20, 25, 30 KJ/m$^2$, may be in the range between the two values exemplified herein. Here, the Charpy impact strength can be measured using edgewise as an impact direction in accordance with JIS K7111-1, using a test piece with notch which is prepared by conditioning for 16 hours in a constant temperature bath maintained at 23 °C and 50% humidity.

The resin composition according to one embodiment of the present invention preferably has a critical strain of 0.9% or more. Here, the critical strain can be measured by the method described in Examples.

A molded body according to one embodiment of the present invention can be obtained by molding the resin composition described above. The molded body can be produced from the resin composition by known molding methods such as injection molding, sheet extrusion molding, vacuum molding, blow molding, foam molding, profile extrusion molding, and the like. At the time of molding, the thermoplastic resin composition is usually processed after being heated to 200 to 300°C and the molded body according to one embodiment of the present invention is preferably processed after being heated to 220 to 280°C. The molded body can be used for automobiles, home appliances, OA equipment, housing materials, daily necessities, and the like.

EXAMPLES

Hereinafter, detailed explanation is provided with reference to Examples. However, the present invention is not limited to the following Examples.

<Production Example of Maleimide-based Resin (A-1)>

To an autoclave with a volume of about 25 liters equipped with a stirrer, 65 parts by mass of styrene, 7 parts by mass of maleic anhydride, 0.1 parts by mass of 2,4-diphenyl-4-methyl-1-pentene, and 25 parts by mass of methyl ethyl ketone were charged. After replacing the inside of the system with nitrogen gas, the temperature was raised to 92°C, and a solution obtained by dissolving 28 parts by mass of maleic anhydride and 0.18 parts by mass of t-butyl peroxy-2-ethylhexanoate in 100 parts by mass of methyl ethyl ketone was continuously added over 7 hours. After the addition, 0.03 part by mass of t-butylperoxy-2-ethylhexanoate was further added, the temperature was raised to 120°C, and reaction was continued for 1 hour to obtain a styrene-maleic anhydride copolymer. Next, 31 parts by mass of aniline and 0.6 parts by mass of triethylamine were added to the polymer solution and reacted at 140°C for 7 hours. After the imidization reaction, the polymer solution was supplied to a vent-type screw extruder and volatile components were removed to obtain a maleimide-based resin (A-1) in the form of pellets. The residual maleimide monomer content in the maleimide-based resin (A-1) was 220 ppm. The content of each constituting unit measured using NMR was 52% by mass of styrene units, 46% by mass of N-phenylmaleimide units, and 2% by mass of maleic anhydride units. The weight average molecular weight (Mw) was 150,000 and the midpoint glass transition temperature (Tmg) was 203°C.

<Production Example of Maleimide-based Resin (A-2)>

To an autoclave with a volume of about 25 liters equipped with a stirrer, 42 parts by mass of styrene, 10 parts by mass of acrylonitrile, 4 parts by mass of maleic anhydride, 0.03 parts by mass of 2,4-diphenyl-4-methyl-1-pentene, and 27 parts by mass of methyl ethyl ketone were charged. After replacing the inside of the system with nitrogen gas, the temperature was raised to 92°C, and a solution obtained by dissolving 21 parts by mass of maleic anhydride and 0.15 parts by mass of t-butylperoxy-2-ethylhexanoate in 85 parts by mass of methyl ethyl ketone and 20 parts by mass of styrene were continuously added over 4.5 hours. After addition of maleic anhydride, a solution obtained by dissolving 0.02 parts by mass of t-butyl peroxy-2-ethylhexanoate 9 parts by mass of methyl ethyl ketone and 3 parts by mass of styrene were continuously added over 30 minutes. After the addition, the temperature was raised to 120°C and the reaction was continued for 30 minutes to complete the polymerization. After that, 23 parts by mass of aniline and 0.4 parts by mass of triethylamine were added to the polymerization solution and the mixture was reacted at 140°C for 7 hours. After the imidization reaction, the polymer solution was supplied to a vent-type screw extruder, and volatile components were removed to obtain a maleimide-based resin (A-2) in the form of pellets. The content of each constituting unit of A-2 measured using NMR was 52% by mass of styrene units, 8% by mass of acrylonitrile units, 39% by mass of N-phenylmaleimide units, and 1% by mass of maleic anhydride units. The weight average molecular weight (Mw) was 140,000 and the midpoint glass transition temperature (Tmg) was 176°C.

<Production Example of Maleimide-based Resin (A-3)>

To an autoclave with a volume of about 25 liters equipped with a stirrer 65 parts by mass of styrene, 7 parts by mass of maleic anhydride, 0.2 parts by mass of 2,4-diphenyl-4-methyl-1-pentene, and 25 parts by mass of methyl ethyl ketone were charged. After replacing the inside of the system with nitrogen gas, the temperature was raised to 92°C, and a solution obtained by dissolving 28 parts by mass of maleic anhydride and 0.18 parts by mass of t-butyl peroxy-2-ethylhexanoate in 100 parts by mass of methyl ethyl ketone was continuously added over 7 hours. After the addition, 0.03 part by mass of t-butylperoxy-2-ethylhexanoate was further added, the temperature was raised to 120°C, and reaction was continued for 1 hour to obtain a styrene-maleic anhydride copolymer. Next, 21 parts by mass of aniline and 0.6 parts by mass of triethylamine were added to the polymer solution and reacted at 140°C for 7 hours. After the imidization reaction, the polymer solution was supplied to a vent-type screw extruder and volatile components were removed to obtain a maleimide-based resin (A-3) in the form of pellets. The residual maleimide monomer content in the maleimide-based resin (A-3) was 200 ppm. The content of each constituting unit measured using NMR was 52% by mass of styrene units, 42% by mass of N-phenylmaleimide units, and 6% by mass of maleic anhydride units, and the weight average molecular weight (Mw) was 120,000, and the midpoint glass transition temperature (Tmg) was 203°C.

<Polyamide Resin (B-1)>

The following material was used as the polyamide resin (B-1).
Rilsan KNO manufactured by Arkema S.A. (terminal amino group amount: 3.2 mgKOH/g)

<Polyamide Resin (B-2)> (Not falling under the protection scope of the present invention)

The following material was used as the polyamide resin (B-2).
Rilsan BESVO A MED manufactured by Arkema S.A. (terminal amino group amount: 2.5 mgKOH/g)

<Polyamide Resin (B-3)> (Not falling under the protection scope of the present invention)

The following material was used as the polyamide resin (B-3).
Rilsan BMNO MED manufactured by Arkema S.A. (terminal amino group amount: 3.4 mgKOH/g)

<Polyamide Resin (B-4)> (Not falling under the protection scope of the present invention)

The following material was used as the polyamide resin (B-4).
CM1017 manufactured by Toray Industries, Inc. (terminal amino group content: 3.4 mgKOH/g)

<Polyamide Resin (B-5)> (Not falling under the protection scope of the present invention)

The following material was used as the polyamide resin (B-5).
CM1007 manufactured by Toray Industries, Inc. (terminal amino group content: 3.4 mgKOH/g)

<Polyamide Resin (B-6)>

The following material was used as the polyamide resin (B-6).
1022B manufactured by UBE Corporation (terminal amino group content: 2.7 mgKOH/g)

<Production Example of ABS Resin (C-1)>

The ABS resin (C-1) was produced by an emulsion graft polymerization method. To a reactor equipped with a stirrer, 143 parts by mass of polybutadiene latex having an average particle size of 0.3 $\mu$m, 0.2 parts by mass of sodium formaldehyde sulfoxylate, 0.01 parts by mass of tetrasodium ethylenediamine tetraacetic acid, 0.005 parts by mass of ferrous sulfate, and 150 parts by mass of pure water was charged, and the mixture was heated to 50°C. 50 parts by mass of a monomer mixture of 75% by mass of styrene and 25% by mass of acrylonitrile, 1.0 part by mass of t-dodecylmercaptan, and 0.15 part by mass of cumene hydroperoxide were continuously added dividedly over 4 hours. After completion of the divisional addition, the temperature was raised to 70°C and the polymerization was completed over 2 hours to obtain a latex of ABS resin (C-1). The resulting latex was coagulated using magnesium sulfate and sulfuric acid as coagulants so that the pH of the slurry at the time of coagulation was 6.8, washed and dehydrated, and dried to obtain a powdery ABS resin (C-1). The polybutadiene content of the obtained ABS resin (C-1) is 53% by mass based on the mixing ratio of the raw materials in the emulsion graft polymerization. The constituting units excluding the rubber-like polymer were measured by NMR and it was 75% by mass of styrene and 25% by mass of acrylonitrile. The gel content measured by centrifugation was 72% by mass. The graft ratio calculated from the gel content and polybutadiene content was 44%. The toluene swelling degree was 8.1, and the number average particle size calculated from TEM observation results was 0.3 $\mu$m.

<Production Example of SAN Resin (C-2)>

The SAN resin (C-2) was produced by continuous bulk polymerization. Polymerization was carried out in a 20 L volume using one continuous stirred tank mixing vessel as a reactor. A raw material solution of 60% by mass of styrene, 22% by mass of acrylonitrile, and 18% by mass of ethylbenzene was prepared and continuously supplied to the reactor at a flow rate of 6.5 L/h. In addition, t-butyl peroxyisopropyl monocarbonate as a polymerization initiator and n-dodecylmercaptan as a chain transfer agent were continuously added to the supply line of the raw material solution so as to have concentrations of 160 ppm and 400 ppm, respectively, to the raw material solution. The reaction temperature of the reactor was adjusted to 145°C. A polymer solution continuously taken out from the reactor was supplied to a vacuum devolatilization tank equipped with a preheater to separate unreacted styrene, acrylonitrile and ethylbenzene. The temperature of the preheater was adjusted so that the polymer temperature in the devolatilization tank was 225°C, and the pressure in the devolatilization tank was set to 0.4 kPa. The polymer was extracted from the vacuum devolatilization tank by a gear pump, extruded into strands, cooled with cooling water, and cut to obtain SAN resin (C-2) in the form of pellets. The constituting units were 74% by mass of styrene units and 26% by mass of acrylonitrile units. Moreover, the weight average molecular weight was 145,000.

<Examples and Comparative Examples>

The maleimide-based resin (A) and the polyamide resin (B) were melt-kneaded at 270°C, 250 rpm, and 25 kg/hr using a twin-screw extruder TEM-35B manufactured by SHIBAURA MACHINE CO., LTD. according to the formulation shown in Table 1. The resulting strand was cut using a pelletizer to obtain approximately 2 mm pellets of the ABS resin modifier. The obtained ABS resin modifier was evaluated for the particle size of the dispersed phase, nominal tensile strain at break, flexural modulus, and Charpy impact strength by the methods described later. Table 1 shows the evaluation results. The obtained ABS resin modifier, ABS resin, and SAN resin were melt-kneaded at 270°C, 250 rpm, and 25 kg/hr using a twin-screw extruder TEM-35B manufactured by SHIBAURA MACHINE CO., LTD. according to the formulation shown in Table 2. The resulting strand was cut using a pelletizer to obtain a resin composition pellet of approximately 2 mm. The melt mass flow rate, Vicat softening temperature, flexural modulus, Charpy impact strength, and chemical resistance of the resulting resin composition were evaluated by the methods described below. Table 2 shows the evaluation results.

<Reference example>

As Reference Example 1, an ABS resin modifier containing the maleimide-based resin (A) and polyamide resin (B) was not added, and the ABS resin and SAN resin were fractionated according to the formulation shown in Table 2 and melt-kneaded at 270°C, 250 rpm, and 25 kg/hr using a twin-screw extruder TEM-35B manufactured by SHIBAURA MACHINE CO., LTD. The resulting strand was cut using a pelletizer to obtain a resin composition pellet of approximately 2 mm.

As Reference Example 2, the maleimide-based resin (A), polyamide resin (B), ABS resin, and SAN resin were fractionated according to the formulation shown in Table 2 without using an ABS resin modifier, and melt-kneaded at 270°C, 250 rpm, and 25 kg/hr using a twin-screw extruder TEM-35B manufactured by SHIBAURA MACHINE CO., LTD. The resulting strand was cut using a pelletizer to obtain a resin composition pellet of approximately 2 mm.

(Average particle size of dispersed phase)

The image of the cross section of the ABS resin modifier observed with transmission electron microscope H-7500 manufactured by Hitachi High-Tech Corporation was analyzed with image analysis software Image-Pro Plus 6.3 manufactured by Hakuto Co., Ltd. A range of 5.7 $\mu$m in length x 8.5 $\mu$m in width was observed at a magnification of 6000 times, and the area of each dispersed phase was measured.

(Nominal Tensile Strain at Break)

The nominal tensile strain at break was measured at a tensile speed of 50 mm/min in accordance with JIS K 7161. The test piece was prepared by conditioning for 16 hours in a constant temperature bath maintained at 23 °C and 50% humidity.

(Flexural Modulus)

The flexural modulus was measured at a bending speed of 2 mm/min in accordance with JIS K7171. The test piece was prepared by conditioning for 16 hours in a constant temperature bath maintained at 23°C and 50% humidity.

(Melt Mass Flow Rate)

The melt mass flow rate was measured at 240°C and 98N load in accordance with JIS K7210.

(Vicat Softening Temperature)

The Vicat softening temperature was measured using the 50 method (load 50N, temperature increase rate 50°C/hour) in accordance with JIS K7206 using a 10 mm x 10 mm, 4 mm thick test piece. The test piece was prepared by conditioning for 16 hours in a constant temperature bath maintained at 23 °C and 50% humidity. HDT & VSPT test equipment manufactured by Toyo Seiki Seisaku-sho, Ltd. was used as a measuring machine.

(Charpy Impact Strength)

The Charpy impact strength was measured using edgewise as an impact direction in accordance with JIS K7111-1, using a test piece with notch. The test piece used was prepared by conditioning for 16 hours in a constant temperature bath maintained at 23 °C and 50% humidity. A digital impact tester manufactured by Toyo Seiki Seisaku-sho, Ltd. was used as the measuring machine.

(Chemical Resistance)

A test piece with a shape of 316 x 20 x 2 mm, a long radius of 250 mm, and a short radius of 150 mm was prepared, and cracks were observed after 48 hours at 23°C by the 1/4 ellipse method, and the critical strain was calculated and evaluated using the following formula. In order to eliminate the influence of molding strain, test pieces were produced by press-molding pellets at 260°C and cutting them out. Magiclean manufactured by Kao Corporation was used as the chemical.

$$\varepsilon = b / 2a^2\{1 - (a^2 - b^2)X^2 / a^4\}^{1.5} \times t \times 100$$

In the formula, $\varepsilon$ is the critical strain, a is the long radius of the test piece, b is the short radius of the test piece, t is the thickness of the test piece, and X is the length from the short radius end to the crack initiation point of the test piece.
The smaller the value of the critical strain, the smaller the amount of stress that causes cracks in the test piece. In the present application, those showing a value of 0.9 or more were accepted.

[Table 1]

| Table 1 | | | MB-1 | MB-2 | MB-3 | MB-4 | MB-5 | MB-6 | MB-7 | MB-8 | MB-9 | MB-10 |
|---|---|---|---|---|---|---|---|---|---|---|---|---|
| Formulation | Maleimide-based resin (A-1) | % by mass | 30 | 30 | | | 15 | 30 | 30 | 30 | 30 | |
| | Maleimide-based resin (A-2) | % by mass | | | 30 | | | | | | | |
| | Maleimide-based resin (A-3) | % by mass | | | | 30 | | | | | | 30 |
| | Polyamide resin (B-1) | % by mass | 70 | | 70 | 70 | 85 | | | | | |
| | Polyamide resin (B-2) | % by mass | | 70 | | | | | | | | |
| | Polyamide resin (B-3) | % by mass | | | | | | | 70 | | | |
| | Polyamide resin (B-4) | % by mass | | | | | | | | 70 | | |
| | Polyamide resin (B-5) | % by mass | | | | | | | | | 70 | 70 |
| | Polyamide resin (B-6) | % by mass | | | | | | 70 | | | | |
| Result | Average particle size of dispersed phase | nm | 25 | 77 | 53 | 87 | 63 | 70 | 490 | 140 | 430 | 270 |
| | Nominal tensile strain at break | % | 93 | 76 | 105 | 81 | 190 | 77 | 3 | 2 | 1 | 1 |
| | Charpy impact strength | kJ/m$^2$ | 7 | 7 | 7 | 5 | 10 | 7 | 3 | 2 | 1 | 1 |

[Table 2]

| Table 2 | | | | Example | | | | | | | Comparative Example | | | | Reference Example | |
|---|---|---|---|---|---|---|---|---|---|---|---|---|---|---|---|---|
| | | | | 1 | 2 | 3 | 4 | 5 | 6 | 7 | 1 | 2 | 3 | 4 | 1 | 2 |
| Formulation | ABS resin modifier | Type | – | MB-1 | MB-1 | MB-2 | MB-3 | MB-4 | MB-5 | MB-6 | MB-7 | MB-8 | MB-9 | MB-10 | – | – |
| | | Amount | % by mass | 14 | 7 | 14 | 14 | 14 | 7 | 14 | 14 | 14 | 14 | 14 | – | – |
| | Maleimide-based resin(A-1) | | % by mass | | | | | | | | | | | | | 4 |
| | Polyamide resin(B-1) | | % by mass | | | | | | | | | | | | | 10 |
| | ABSResin(C-1) | | % by mass | 30 | 30 | 30 | 30 | 30 | 30 | 30 | 30 | 30 | 30 | 30 | 30 | 30 |
| | SANResin(C-2) | | % by mass | 56 | 63 | 56 | 56 | 56 | 63 | 56 | 56 | 56 | 56 | 56 | 70 | 56 |
| Evaluation Result | Melt mass flow rate (220° C,98N) | | g/10min | 6.1 | 8.0 | 6.6 | 7.1 | 9.6 | 8.0 | 6.8 | 8.8 | 5.6 | 5.6 | 7.0 | 9.8 | 4.8 |
| | Vicat softening temperature | | ℃ | 102 | 101 | 102 | 103 | 103 | 101 | 104 | 102 | 102 | 102 | 104 | 101 | 105 |
| | Flexural modulus | | MPa | 2170 | 2320 | 2230 | 2190 | 2230 | 2320 | 2300 | 2260 | 2220 | 2250 | 2320 | 2460 | 2280 |
| | Charpy impact strength | | kJ/m$^2$ | 27 | 23 | 25 | 26 | 18 | 23 | 15 | 8 | 13 | 11 | 8 | 19 | 21 |
| | Chemical resistance | Magiclean | – | >1.11 | 0.91 | >1.11 | >1.11 | 0.96 | 0.96 | 0.96 | >1.11 | >1.11 | 0.91 | 0.90 | 0.81 | 1.00 |

By using the ABS resin modifiers of the Examples, it is possible to obtain a resin composition having an appropriate melt mass flow rate and Vicat softening temperature, and excellent impact strength, chemical resistance, and rigidity. On the other hand, the resin composition using the ABS resin modifier of the Comparative Examples and the Reference Example to which no ABS resin modifier was added were inferior in one or more of the impact strength and chemical resistance.

**INDUSTRIAL APPLICABILITY**

The resin composition using the ABS resin modifier of the present invention has an excellent balance of heat resistance, mechanical strength, chemical resistance, and moldability, so it can be suitably used for parts having complicated shapes, such as automobile interior materials.

**Claims**

1. An ABS resin modifier comprising a maleimide-based resin (A) having a maleimide-based monomer unit, a styrene-based monomer unit, and an unsaturated dicarboxylic acid anhydride-based monomer unit, and a polyamide resin (B), wherein:

   the ABS resin modifier has a dispersed phase;
   the dispersed phase has an average particle size of 100 nm or less;
   an amount of the styrene-based monomer unit contained in the maleimide-based resin (A) is 40 to 70% by mass, when entire maleimide-based resin (A) is taken as 100% by mass;
   an amount of the maleimide-based monomer unit contained in the maleimide-based resin (A) is 10 to 50% by mass when entire maleimide-based resin (A) is taken as 100% by mass; and
   the polyamide resin (B) has a terminal amino group content of 2.6 to 3.3 mgKOH/g.

2. The ABS resin modifier of Claim 1, wherein the maleimide-based resin (A) contains 1 to 10% by mass of the unsaturated dicarboxylic anhydride-based monomer unit with respect to 100% by mass of the maleimide-based resin (A).

3. The ABS resin modifier of Claim 1 or 2, wherein, when a test piece is prepared by conditioning for 16 hours in a constant temperature bath maintained at 23 °C and 50% humidity, a nominal tensile strain at break of the test piece measured at a tensile speed of 50 mm/min in accordance with JIS K 7161 is 10% or more.

4. A resin composition comprising the ABS resin modifier of any one of Claims 1 to 3 and at least one resin (C) selected from ABS resin, SAN resin, ASA resin and AES resin.

5. The resin composition of Claim 4, wherein the polyamide resin (B) contained in the resin composition is less than 20% by mass when entire resin composition is taken as 100% by mass.

6. The resin composition of Claim 4 or 5, wherein, when a test piece with a notch is prepared by conditioning for 16 hours in a constant temperature bath maintained at 23°C and 50% humidity, a Charpy impact strength of the test piece with the notch measured using edgewise as an impact direction in accordance with JIS K7111-1 is 12 KJ/m$^2$ or more.

7. A method for producing a resin composition, comprising the step of melt-kneading raw materials containing the ABS resin modifier of any one of Claims 1 to 3 and at least one resin (C) selected from ABS resin, SAN resin, ASA resin, and AES resin in an extruder.

8. A molded body obtained by molding the resin composition of any one of Claims 4 to 6.

**Patentansprüche**

1. ABS-Harzmodifikator, umfassend ein Harz (A) auf Maleimidbasis mit einer Monomereinheit auf Maleimidbasis, einer Monomereinheit auf Styrolbasis und einer Monomereinheit auf Basis eines ungesättigten Dicarbonsäureanhydrids und ein Polyamidharz (B), wobei:

der ABS-Harzmodifikator eine dispergierte Phase aufweist;

die dispergierte Phase eine durchschnittliche Partikelgröße von 100 nm oder weniger aufweist;

eine Menge der Monomereinheit auf Styrolbasis, die in dem Harz (A) auf Maleimidbasis enthalten ist, 40 bis 70 Masse-% beträgt, wenn das gesamte Harz (A) auf Maleimidbasis als 100 Masse-% betrachtet wird;

eine Menge der Monomereinheit auf Maleimidbasis, die in dem Harz (A) auf Maleimidbasis enthalten ist, 10 bis 50 Masse-% beträgt, wenn das gesamte Harz (A) auf Maleimidbasis als 100 Masse-% betrachtet wird; und

das Polyamidharz (B) einen Gehalt an terminalen Aminogruppen von 2,6 bis 3,3 mgKOH/g aufweist.

2. ABS-Harzmodifikator nach Anspruch 1, wobei das Harz (A) auf Maleimidbasis 1 bis 10 Masse-% der Monomereinheit auf Basis eines ungesättigten Dicarbonsäureanhydrids, bezogen auf 100 Masse-% des Harzes (A) auf Maleimidbasis, enthält.

3. ABS-Harzmodifikator nach Anspruch 1 oder 2, wobei, wenn ein Prüfstück durch 16-stündiges Konditionieren in einem Bad mit konstanter Temperatur, das bei 23 °C und 50 % Luftfeuchtigkeit gehalten wird, hergestellt wird, die nominelle Bruchdehnung des Prüfstücks, gemessen bei einer Zuggeschwindigkeit von 50 mm/min gemäß JIS K 7161, 10 % oder mehr beträgt.

4. Harzzusammensetzung, umfassend den ABS-Harzmodifikator nach einem der Ansprüche 1 bis 3 und mindestens ein Harz (C), das aus ABS-Harz, SAN-Harz, ASA-Harz und AES-Harz ausgewählt ist.

5. Harzzusammensetzung nach Anspruch 4, wobei das in der Harzzusammensetzung enthaltene Polyamidharz (B) weniger als 20 Masse-% ausmacht, wenn die gesamte Harzzusammensetzung als 100 Masse-% betrachtet wird.

6. Harzzusammensetzung nach Anspruch 4 oder 5, wobei, wenn ein Prüfstück mit einer Kerbe durch 16-stündiges Konditionieren in einem Bad mit konstanter Temperatur, das bei 23 °C und 50 % Luftfeuchtigkeit gehalten wird, hergestellt wird, die Charpy-Schlagzähigkeit des Prüfstücks mit der Kerbe, gemessen mit Hochkant-Schlagrichtung gemäß JIS K7111-1, 12 KJ/m$^2$ oder mehr beträgt.

7. Verfahren zum Herstellen einer Harzzusammensetzung, umfassend den Schritt des Schmelzknetens von Rohmaterialien, die den ABS-Harzmodifikator nach einem der Ansprüche 1 bis 3 und mindestens ein Harz (C), das aus ABS-Harz, SAN-Harz, ASA-Harz und AES-Harz ausgewählt ist, enthalten, in einem Extruder.

8. Formkörper, erhalten durch Formen der Harzzusammensetzung nach einem der Ansprüche 4 bis 6.

**Revendications**

1. Modificateur de résine ABS comprenant une résine à base de maléimide (A) ayant une unité monomère à base de maléimide, une unité monomère à base de styrène, et une unité monomère à base d'anhydride d'acide dicarboxylique insaturé, et une résine de polyamide (B), dans lequel :

le modificateur de résine ABS a une phase dispersée ;

la phase dispersée a une taille moyenne de particule de 100 nm ou moins ;

une quantité de l'unité monomère à base de styrène contenue dans la résine à base de maléimide (A) est de 40 à 70 % en masse, lorsque la résine à base de maléimide (A) entière est considérée comme étant de 100 % en masse ;

une quantité de l'unité monomère à base de maléimide contenue dans la résine à base de maléimide (A) est de 10 à 50 % en masse lorsque la résine à base de maléimide (A) entière est considérée comme étant de 100 % en masse ; et

la résine de polyamide (B) a une teneur en groupes aminés terminaux de 2,6 à 3,3 mgKOH/g.

2. Modificateur de résine ABS de la revendication 1, dans lequel la résine à base de maléimide (A) contient de 1 à 10 % en masse de l'unité monomère à base d'anhydride d'acide dicarboxylique insaturé par rapport à 100 % en masse de la résine à base de maléimide (A).

3. Modificateur de résine ABS de la revendication 1 ou 2, dans lequel, lorsqu'une pièce de test est préparée par conditionnement pendant 16 heures dans un bain à température constante maintenu à 23 °C et 50 % d'humidité, une déformation de traction nominale à la rupture de la pièce de test mesurée à une vitesse de traction de 50 mm/min conformément à JIS K 7161 est supérieure ou égale à 10 %.

4. Composition de résine comprenant le modificateur de résine ABS de l'une quelconque des revendications 1 à 3 et au moins une résine (C) sélectionnée parmi la résine ABS, la résine SAN, la résine ASA et la résine AES.

5. Composition de résine de la revendication 4, dans laquelle la résine de polyamide (B) contenue dans la composition de résine est inférieure à 20 % en masse lorsque la composition de résine entière est prise à 100 % en masse.

6. Composition de résine de la revendication 4 ou 5, dans laquelle, lorsqu'une pièce de test avec une encoche est préparée par conditionnement pendant 16 heures dans un bain à température constante maintenu à 23°C et 50% d'humidité, une résistance au choc Charpy de la pièce de test avec l'encoche mesurée en utilisant le sens du bord comme direction de choc conformément à JIS K7111-1 est de 12 KJ/m$^2$ ou plus.

7. Procédé de production d'une composition de résine, comprenant l'étape de malaxage à l'état fondu de matières premières contenant le modificateur de résine ABS de l'une quelconque des revendications 1 à 3 et au moins une résine (C) sélectionnée parmi la résine ABS, la résine SAN, la résine ASA et la résine AES dans une extrudeuse.

8. Corps moulé obtenu par moulage de la composition de résine de l'une quelconque des revendications 4 à 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007217621 A
- JP 2014122254 A
- JP 2020066734 A
- JP 5270888 B
- JP 2008247983 A